# EUROPÄISCHE PATENTSCHRIFT

(11) **EP 0 974 715 B1**
(45) Veröffentlichungstag und Bekanntmachung des Hinweises auf die Patenterteilung: **28.04.2004**
(21) Anmeldenummer: 99111687.2
(22) Anmeldetag: 16.06.1999
(51) Int. Cl.: E05B 1/00, B29C 45/14, B29C 44/12, B29C 70/74

(54) **Verfahren zur Herstellung von Tür- und/oder Fenstergriffen und/oder Sanitärelementen**
Method for producing door- and/or windowhandles and/or sanitary elements
Méthode de production pour des poignées de portes et/ou de fenêtres et/ou des éléments sanitaires

(30) Priorität: 23.07.1998 DE 19833264
(43) Veröffentlichungstag der Anmeldung: 26.01.2000
(73) Patentinhaber: HEWI Heinrich Wilke GmbH, 34454 Bad Arolsen (DE)
(72) Erfinder: Rummel, Uwe, 34454 Bad Arolsen (DE)
(74) Vertreter: Manitz, Finsterwald & Partner GbR

(56) Entgegenhaltungen:
- EP-A- 0 658 422
- GB-A- 1 043 210
- US-A- 3 379 800
- US-A- 3 400 446
- US-A- 4 823 434
- US-A- 5 133 912
- PATENT ABSTRACTS OF JAPAN vol. 007, no. 059 (M-199), 11. März 1983 (1983-03-11) & JP 57 203526 A (KASAI KOGYO KK), 13. Dezember 1982 (1982-12-13)
- PATENT ABSTRACTS OF JAPAN vol. 018, no. 679 (M-1728), 21. Dezember 1994 (1994-12-21) & JP 06 270183 A (TOYODA GOSEI CO LTD), 27. September 1994 (1994-09-27)

## Beschreibung

Die Erfindung betrifft ein Verfahren zur Herstellung von Tür- und/ oder Fenstergriffen und/oder Sanitärelementen.

Bei bekannten, mit einer Kunststoffoberfläche versehenen Griffen und Sanitärelementen ist ein erheblicher wirtschaftlicher Aufwand hinsichtlich der farblichen Gestaltung erforderlich, da bei einem die genannte Oberfläche schaffenden Spritzvorgang Kunststoff verwendet werden muß, welcher bereits die jeweils gewünschte Farbe aufweist. Obwohl also nur ein geringer Teil des gespritzten Kunststoffs letztlich sichtbar ist, muß das gesamte verwendete Material die gewünschte Farbe aufweisen, was zu einem nachteiligen Kostenaufwand führt.

Noch aufwendiger wird die Gestaltung der Oberfläche, wenn diese mit einem Muster oder einem Dekor versehen werden soll, da dieses Muster dann in einem separaten Arbeitsgang aufgebracht werden muß. Hierbei ist es dann auch von Nachteil, daß aufgedruckte Muster und Dekore bei häufiger Berührung im Gebrauch hinsichtlich ihrer Dauerhaftigkeit beschränkt sind.

Aus der US 3,400,446 ist ein Verfahren zur Herstellung von Türgriffen bekannt, bei dem ein Paar von Metallschalen miteinander verlötet und der entstehende Hohlraum mit Kunststoff gefüllt wird.

Die US 3,379,800 beschreibt ein Verfahren zur Herstellung von Sanitärelementen, bei dem ein unterer Teil mit Kunststoff befüllt wird und anschließend mit einem oberen Teil verklebt oder an den angrenzenden Rändern versiegelt wird.

Eine Aufgabe der Erfindung besteht darin, ein Verfahren der eingangs genannten Art so auszubilden, daß beliebige Sichtflächenbereiche auf wirtschaftliche Weise mit frei wählbaren Farben und/oder Mustern versehen werden können.

Erfindungsgemäß wird diese Aufgabe dadurch gelöst, daß zumindest zwei für unterschiedliche Sichtflächenbereiche vorgesehene Folienteile in einem einzigen Spritzvorgang mit Kunststoff hinterspritzt und verbunden werden.

Durch die Vorsehung von zumindest zwei Folienteilen wird erreicht, daß auch solche Sichtflächenbereiche mit einer Farbe oder einem dauerhaft beständigen Muster versehen werden können, die aufgrund ihrer räumlichen Anordnung nicht einem einzigen Folienteil zugeordnet werden können. Dies trifft beispielsweise zu für Sichtflächenbereiche, die während des Spritzvorgangs in voneinander separaten Teilen, z.B. zwei Halbschalen einer Spritzform ausgebildet werden. Erfindungsgemäß kann also z.B. jedem Teil einer Spritzform, insbesondere den beiden Halbschalen einer Spritzform, jeweils ein Folienteil zugeordnet werden, welches das jeweilige Spritzformteil teilweise oder vollständig auskleidet, so daß sich nach einem Spritzvorgang eine beispielsweise geschlossene, von den verschiedenen Folienteilen gebildete Sichtfläche ergibt.

Die Tatsache, daß erfindungsgemäß alle Folienteile in einem einzigen Spritzvorgang mit Kunststoff hinterspritzt werden, führt zu einer besonders wirtschaftlichen Anwendbarkeit des erfindungsgemäßen Verfahrens, da außer dem Einlegen der Folienteile in die Spritzformteile keine zusätzlichen Arbeitsschritte benötigt werden.

Erfindungsgemäß ist es also beispielsweise möglich, dreidimensionale Körper, wie z.B. Türgriffe, Fenstergriffe, Armaturengriffe, Seifenhalter, Handgriffe, Wandhaken etc., in sämtlichen Sichtflächenbereichen oder in ausgewählten Sichtflächenbereichen auf wirtschaftliche Art und Weise mit beliebigen Farben oder Mustern zu versehen.

Die Folienteile können so bemessen sein, daß sie sich während des Spritzvorgangs in Randbereichen überlappen. Ebenso ist es möglich, die Folienteile so zu bemessen, daß sie während des Spritzvorgangs aneinander anstoßen.

In demjenigen Fall, in dem eine Überlappung der Randbereiche gegeben ist, wird auf vorteilhafte Weise erreicht, daß der Druck, mit dem die Kunststoffmasse eingespritzt wird, die überlappenden Randbereiche aneinanderpreßt, so daß die Überlappung der Randbereiche beim fertigen Produkt zu keiner störenden Stufe in der Oberfläche führt.

Von Vorteil ist, wenn die zweidimensionalen Folienteile vor dem Spritzvorgang unter Druck- und/oder Hitzeeinwirkung, beispielsweise mittels eines Tiefziehvorgangs, vorgeformt werden. Die Formgebung erfolgt dabei derart, daß die Folienteile bereits die Form der auszubildenden Sichtflächen aufweisen.

Bei der Herstellung von Tür- oder Fenstergriffen sowie auch bei der Herstellung bestimmter Sanitärelemente bietet es sich an, wenn die beiden Folienteile jeweils eine Halbschalenform aufweisen, die im zusammengesetzten Zustand die Form einer einseitig offenen Hülse oder eines zweiseitig offenen Rohrkörpers besitzen. Diese beiden Halbschalen können dann jeweils in eine Formhälfte der Spritzgußform eingelegt und in einem einzigen Spritzvorgang mit Kunststoff hinterspritzt werden.

Wenn mit einem Muster versehene Sichtflächen erzeugt werden sollen, können die zweidimensionalen Folienteile vor dem Vorformungsvorgang ein verzerrtes Muster aufweisen, welches durch den Vorformungsvorgang dann entzerrt wird, wodurch dem Muster sein endgültiges Aussehen verliehen wird.

Von besonderem Vorteil ist es, wenn die vorgeformten Folienteile in einem Magazin gespeichert werden, aus dem sie individuell abrufbar sind. Es bietet sich hierbei die Verwendung von flächigen Tableaus an, auf denen die Folienteile nebeneinander angeordnet sind, so daß mittels eines Greifers jedes beliebige Folienteil gegriffen und in ein jeweiliges Spritzwerkzeug eingelegt werden kann. Ein Designwechsel kann z.B. dadurch erreicht werden, daß auf einem einzelnen Tableau verschieden gestaltete Formteile gespeichert werden, die mittels des genannten Greifers beliebig abrufbar sind. Ebenso ist es jedoch auch möglich, auf einem Tableau jeweils nur ein einziges Design von Formteilen zuzulassen und einen Designwechsel durch ein Auswechseln von Tableaus zu bewirken.

Eine besonders gute Verbindung zwischen den Folienteilen und dem hinterspritzten Kunststoff ergibt sich dann, wenn Folienteile und zu hinterspritzender Kunststoff zumindest teilweise aus dem gleichen Material bestehen. Besonders vorteilhaft ist es, wenn sowohl Folienteile als auch Kunststoff aus Polyamid gebildet sind.

Falls die erfindungsgemäßen Sichtflächen für eine Handhabung vorgesehen sind, d.h. wenn sie beispielsweise als Griffe ausgebildet werden, oder wenn besondere optische Effekte erzielt werden sollen, ist es möglich, das Folienmaterial reliefartig auszubilden, insbesondere mit Noppen oder Rillen zu versehen.

Falls den Sichtflächen ein besonders technisches Aussehen verliehen werden soll, kann das Folienmaterial mit einem Gewebe versehen werden, welches insbesondere zwischen zwei Folienschichten angeordnet werden kann.

Besonders gute Ergebnisse lassen sich mit dem erfindungsgemäßen Verfahren dann erzielen, wenn die Folienteile eine weitgehend konstante Dikke, insbesondere eine Dicke zwischen 0,1 mm und 1 mm besitzen. Die Toleranz der Dicke der Folienteile liegt dabei vorzugsweise unter 0,3 mm.

Besonders wirtschaftlich läßt sich das erfindungsgemäße Verfahren dann einsetzen, wenn als zu hinterspritzender Kunststoff recycletes Polyamid verwendet wird. Die Verwendung von recycletem Polyamid ist erfindungsgemäß möglich, da die Farbe des zu hinterspritzenden Kunststoffs letztlich keine Rolle spielt, weil dieser durch die erfindungsgemäß vorgesehenen Folienteile im fertigen Produkt abgedeckt wird.

Die Erfindung bezieht sich auch auf solche Verfahren, bei denen zumindest ein Teil eines mehrteiligen Tür- und/oder Fenstergriffs und/oder eines mehrteiligen Sanitärelements nach einem erfindungsgemäßen Verfahren hergestellt wird, wobei die einzelnen Teile nach dem Spritzvorgang zusammengesetzt werden. Insbesondere ist es möglich, einen Tür- und/oder Fenstergriff und/oder ein Sanitärelement herzustellen, bei welchem zumindest im Bereich eines bestimmten Abschnitts ein Grundelement mit einer zumindest einseitig offenen Hülse derart lösbar koppelbar ist, daß die Hülse das Grundelement im gekoppelten Zustand mehrseitig umgibt, wobei lediglich die Hülse nach dem erfindungsgemäßen Verfahren hergestellt wird. Ebenso ist es jedoch auch möglich, sowohl die Hülse als auch das Grundelement nach dem erfindungsgemäßen Verfahren herzustellen, so daß letztlich das gesamte Produkt aus Folienteilen gebildete Sichtflächen aufweist.

Weitere bevorzugte Ausgestaltungen des erfindungsgemäßen Verfahrens sind in den Unteransprüchen beschrieben.

Die Erfindung wird nachfolgend anhand eines Ausführungsbeispiels unter Bezugnahme auf die Zeichnungen beschrieben; in diesen zeigen:
- Fig. 1: eine dreidimensionale Ansicht eines ersten vorgeformten Folienteils,
- Fig. 2: eine dreidimensionale Ansicht eines zweiten vorgeformten Folienteils,
- Fig. 3: eine dreidimensionale Ansicht eines erfindungsgemäßen Türgriffs,
- Fig. 4: einen vergrößerten Schnitt A-A durch den Türgriff gemäß Fig. 3, und
- Fig. 5: eine dreidimensionale Ansicht eines weiteren erfindungsgemäßen Türgriffs.

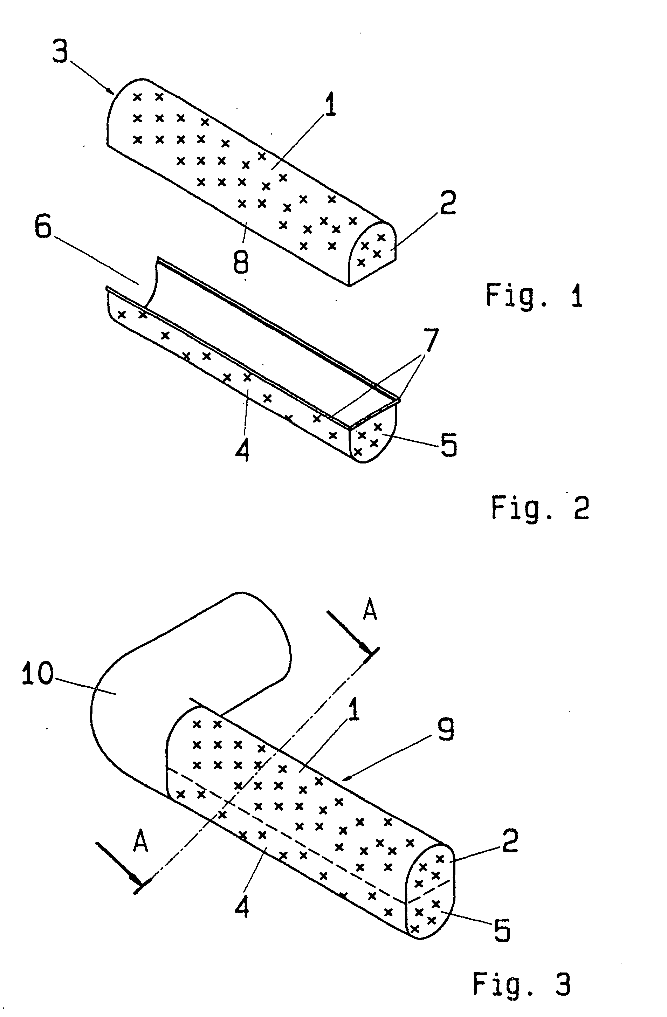

Fig. 1 zeigt ein erstes Folienteil 1, welches bereits einen Vorformungsprozeß durchlaufen hat. Das Folienteil 1 ist zur Bildung der oberen Hälfte eines Griffabschnitts eines Türgriffs 9 (Fig. 3) vorgesehen, wobei der Griffabschnitt eine im wesentlichen zylindrische Form mit einer senkrecht zu seiner Längsachse verlaufenden Stirnfläche aufweist.

Dementsprechend besitzt das Folienteil 1 die Form einer halbzylinderförmigen Schale, welche eine geschlossene Stirnseite 2 und eine offene Stirnseite 3 aufweist.

Auf seinen äußeren, als Sichtflächen vorgesehenen Seiten weist das Folienteil 1 ein in Fig. 1 schematisch durch Kreuze symbolisiertes Muster auf.

Fig. 2 zeigt ein zweites, für die Unterseite des Griffabschnitts des Türgriffs 9 (Fig. 3) vorgesehenes und ebenfalls bereits vorgeformtes Folienteil 4. Wie auch das Folienteil 1 gemäß Fig. 1 weist das Folienteil 4 eine geschlossene Stirnseite 5 und eine offene Stirnseite 6 auf. Auch das zweite Folienteil 4 ist auf seiner als Sichtfläche vorgesehenen Seite mit einem Muster versehen, welches dem Muster des Folienteils 1 entspricht.

Im Unterschied zum ersten Folienteil 1 ist der Randbereich 7 des zweiten Folienteils 4 etwas nach außen erweitert, so daß der dem Randbereich 7 gegenüberliegende Randbereich 8 des ersten Folienteils 1 vom Randbereich 7 des zweiten Folienteils 4 aufgenommen werden kann.

Demzufolge ist bei zusammengesetzten Folienteilen 1 und 4 eine Überlappung der Randbereiche 7 und 8 gegeben, wobei der Randbereich 7 des zweiten Folienteils 4 außen und der Randbereich 8 des ersten Folienteils 1 innen zu liegen kommt.

Die beiden zusammengesetzten Folienteile 1 und 4 bilden gemeinsam eine einseitig offene, im wesentlichen zylindrische Hülse.

Bei der Herstellung des Türgriffs 9 gemäß Fig. 3 unter Verwendung der Folienteile 1 und 4 wird folgendermaßen vorgegangen:

Eine zweidimensionale, mit dem Muster gemäß den Fig. 1 und 2 versehene Folie wird in einem Vorformungsvorgang derart verformt, daß die beiden Folienteile gemäß den Fig. 1 und 2 erzeugt werden. Dabei ist das Muster der zweidimensionalen Folie derart verzerrt, daß es durch den Vorformungsvorgang entzerrt wird und somit letztlich nach dem Vorformungsvorgang das gewünschte Aussehen besitzt.

Die beiden Folienteile 1 und 4 werden dann in jeweils eine Hälfte einer Spritzform eingelegt, wobei die Spritzform die Negativform des gesamten Türgriffs 9 gemäß Fig. 3 aufweist. Die Spritzform ist also für die Herstellung des gesamten Türgriffs 9, d.h. sowohl für die Herstellung des Griffabschnitts als auch für die Herstellung des damit verbundenen Ansatzstücks 10 vorgesehen.

Die beiden Spritzformhälften werden dann aufeinander zu bewegt, wodurch auch die beiden Folienteile 1, 4 zusammengeführt werden, so daß sie letztlich eine einseitig geschlossene Hülse bilden, bei der der Randbereich 7 des Folienteils 4 den Randbereich 8 des Folienteils 1 überlappt.

Nach dem Zusammenführen der beiden Spritzformhälften wird Kunststoffmaterial in die Spritzform eingespritzt, so daß die aus den Folienteilen 1 und 4 gebildete einseitig geschlossene Hülse mit Kunststoff ausgefüllt und das Ansatzstück 10 in der Spritzform gebildet wird. Sowohl das Ausfüllen der Hülse als auch das Bilden des Ansatzstücks 10 geschieht mit einem einzigen Spritzvorgang.

Nach Abschluß des Spritzvorgangs wird der fertige Türgriff 9 aus der Spritzform entnommen. Die Sichtfläche des Griffabschnitts des Türgriffs 9 wird durch die mit dem Muster versehenen Folienteile 1 und 4 gebildet, während die Sichtfläche des Ansatzstücks 10 durch den eingespritzten Kunststoff selbst gebildet wird. Auch bei dieser Ausbildungsform des erfindungsgemäßen Verfahrens ist es möglich, als eingespritzten Kunststoff recycletes Polyamid zu verwenden, da dieses beispielsweise eine graue Farbe besitzen kann, die für das Ansatzstück 10 ohne weiteres akzeptabel ist. Der durch die Folienteile 1 und 4 gebildete Griffabschnitt kann durch die Wahl eines geeigneten Musters und geeigneter Folienfarben optisch ansprechend ausgebildet werden.

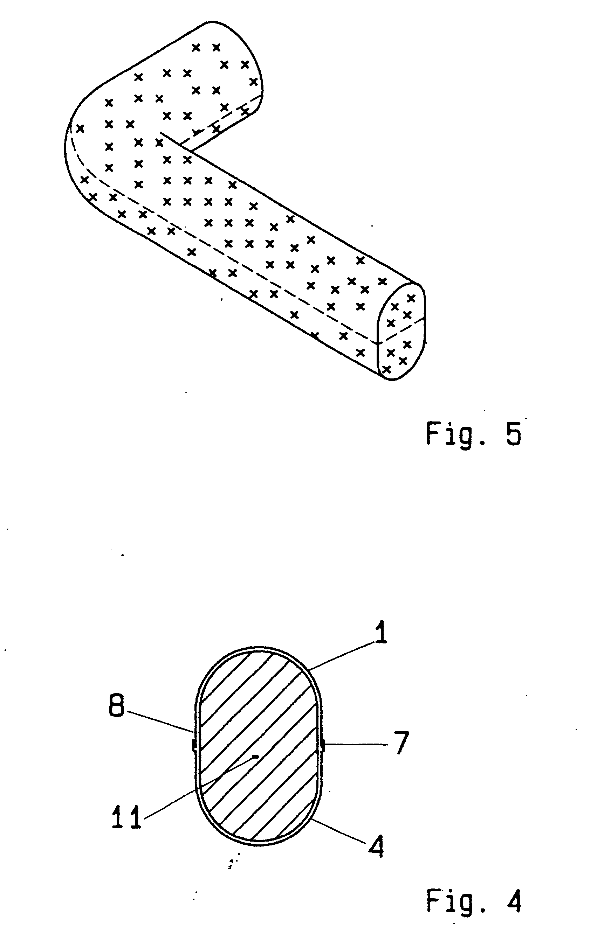

Fig. 4 zeigt einen Schnitt gemäß der Schnittlinie A-A entsprechend Fig.3 in vergrößerter Darstellung.

Hier ist zu sehen, daß der Randbereich 7 des Folienteils 4 den Randbereich 8 des Folienteils 1 überlappt und der durch die beiden zusammengefügten Folienteile 1 und 4 gebildete Hohlraum nach dem Spritzvorgang von Kunststoff 11 ausgefüllt ist. Das Hinterspritzen des genannten Hohlraums mit Kunststoff bewirkt, daß der Randbereich 8 infolge des Spritzdrucks nach außen an den Randbereich 7 gepreßt wird, so daß sich ein fast nahtloser Übergang zwischen den beiden Folienteilen 1 und 4 ergibt, der im fertigen Griffabschnitt des Türgriffs 9 für einen Benutzer kaum spürbar ist.

Alternativ zu dem beschriebenen Herstellungsverfahren ist es z.B. auch möglich,
- als Spritzmaterial farbigen Kunststoff zu verwenden, so daß beispielsweise eine gewünschte Farbabstimmung zwischen Ansatzstück 10 und Griffabschnitt des Türgriffs 9 erreicht wird,
- vorgeformte Folienteile anzufertigen, die zusammengesetzt die Form des gesamten, in Fig. 5 dargestellten Türgriffs besitzen und mit Kunststoff hinterspritzt werden, so daß - wie in Fig. 5 gezeigt - letztlich keinerlei Sichtflächen vom hinterspritzten Kunststoff gebildet werden und der gesamte Türgriff das Muster bzw. die Farbe der Folienteile aufweist, oder
- lediglich einen Teil eines Türgriffs 9, insbesondere seinen Griffabschnitt mit dem erfindungsgemäßen Verfahren und einen Grundkörper des Türgriffs 9 mit einem separaten Spritzverfahren herzustellen, wobei Griffabschnitt und Grundkörper anschließend zusammengefügt werden. In diesem Fall kann der Griffabschnitt beispielsweise als auf den Grundkörper aufschiebbare Hülse oder als separates, mit dem Grundkörper mittels einer Schraub- oder Steckverbindung koppelbares Griffelement ausgeführt werden.

Die vorstehende Figurenbeschreibung bezieht sich rein exemplarisch auf die Herstellung eines Türgriffs, in entsprechender Weise können Fenstergriffe und vorstehend erwähnte Sanitärelemente hergestellt werden.

### Bezugszeichenliste

- 1: erstes Folienteil
- 2: geschlossene Stirnseite
- 3: offene Stirnseite
- 4: zweites Folienteil
- 5: geschlossene Stirnseite
- 6: offene Stirnseite
- 7: Randbereich
- 8: Randbereich
- 9: Türgriff
- 10: Ansatzstück
- 11: hinterspritzter Kunststoff

## Patentansprüche

1. Verfahren zur Herstellung von Tür- und/ oder Fenstergriffen (9) und/oder Sanitärelementen,
**dadurch gekennzeichnet,**
**daß** zumindest zwei für unterschiedliche Sichtflächenbereiche vorgesehene Folienteile (1, 4) in einem einzigen Spritzvorgang mit Kunststoff (11) hinterspritzt und verbunden werden.

2. Verfahren nach Anspruch 1,
**dadurch gekennzeichnet,**
**daß** sich die Folienteile (1, 4) während des Spritzvorgangs in Randbereichen (7, 8) überlappen oder
**daß** die Folienteile während des Spritzvorgangs aneinander anstoßen.

3. Verfahren nach einem der vorhergehenden Ansprüche,
**dadurch gekennzeichnet,**
**daß** allen Sichtflächen Folienteile (1, 4) zugeordnet sind.

4. Verfahren nach einem der vorhergehenden Ansprüche,
**dadurch gekennzeichnet,**
**daß** die Folienteile (1, 4) vor dem Spritzvorgang unter Druck- und/ oder Hitzeeinwirkung von einer zweidimensionalen in eine dreidimensionale Form überführt werden, wobei insbesondere zwei Folienteile (1, 4) jeweils eine Halbschalenform aufweisen, die im zusammengesetzten Zustand die Form einer einseitig offenen Hülse oder eines zweiseitig offenen Rohrkörpers besitzen.

5. Verfahren nach einem der vorhergehenden Ansprüche,
**dadurch gekennzeichnet,**
**daß** die zweidimensionalen Folienteile (1, 4) vor dem Vorformungsvorgang ein verzerrtes Muster aufweisen, welches durch den Vorformungsvorgang sein endgültiges Aussehen erhält.

6. Verfahren nach einem der vorhergehenden Ansprüche,
**dadurch gekennzeichnet,**
**daß** die Folienteile (1, 4) und der zu hinterspritzende Kunststoff (11) zumindest teilweise aus dem gleichen Material bestehen, und/oder daß als Folienmaterial Polyamid verwendet wird, und/oder daß das Folienmaterial reliefartig ausgebildet, insbesondere genoppt oder gerillt ist.

7. Verfahren nach einem der vorhergehenden Ansprüche,
**dadurch gekennzeichnet,**
**daß** das Folienmaterial mit einem Gewebe versehen ist, das insbesondere zwischen zwei Folienschichten angeordnet ist.

8. Verfahren nach einem der vorhergehenden Ansprüche,
**dadurch gekennzeichnet,**
**daß** die Folienteile (1, 4) eine konstante Dicke, insbesondere eine Dicke zwischen 0,1 mm und 1 mm besitzen, wobei insbesondere die Toleranz der Dicke der Folienteile (1,4) unter 0,1 mm liegt.

9. Verfahren nach einem der vorhergehenden Ansprüche,
**dadurch gekennzeichnet,**
**daß** als zu hinterspritzender Kunststoff (11) recycltes Polyamid verwendet wird.

10. Verfahren, bei dem zumindest ein Teil eines mehrteiligen Türund/oder Fenstergriffs (9) und/ oder eines mehrteiligen Sanitärelements nach einem Verfahren gemäß einem der Ansprüche 1 bis 9 hergestellt wird, wobei die einzelnen Teile nach dem Spritzvorgang zusammengesetzt werden.

## Claims

1. Method of manufacturing door and/or window handles (9) and/or sanitary elements, **characterized in that** at least two foil parts (1, 4) provided for different visible surface areas have plastic (11) injected behind them and are connected in a single injection molding process.

2. Method in accordance with claim 1, **characterized in that** the foil parts (1, 4) overlap in the edge regions (7, 8) during the injection molding process; or **in that** the foil parts abut one another during the injection molding process.

3. Method in accordance with any one of the preceding claims, **characterized in that** foil parts (1, 4) are associated with all visible surfaces.

4. Method in accordance with any one of the preceding claims, **characterized in that** the foil parts (1, 4) are changed from a two-dimensional shape into a three-dimensional shape under the action of pressure and/or heat prior to the injection molding process, with in particular two foil parts (1, 4) each having a half shell form which, in the assembled state, have the form of a sleeve open at one end or of a tubular body open at two ends.

5. Method in accordance with any one of the preceding claims, **characterized in that** the two-dimensional foil parts (1, 4) have a distorted pattern prior to the preforming process, which receives its final appearance during the preforming process.

6. Method in accordance with any one of the preceding claims, **characterized in that** the foil parts (1, 4) and the plastic (11) to be injected behind them consist at least partially of the same material; and/or **in that** polyamide is used as the foil material; and/or **in that** the foil material is of relief like design, and is in particular provided with nobbles or grooves.

7. Method in accordance with any one of the preceding claims, **characterized in that** the foil material is provided with a fabric which is in particular arranged between two foil layers.

8. Method in accordance with any one of the preceding claims, **characterized in that** the foil parts (1, 4) have a constant thickness, in particular a thickness between 0.1 mm and 1 mm, with in particular the tolerance of the thickness of the foil parts (1, 4) lying below 0.1 mm.

9. Method in accordance with any one of the preceding claims, **characterized in that** recycled polyamide is used as the plastic (11) to be injected behind the foil parts.

10. Method in which at least one part of a multi-part door and/or window handle (9) and/or of a multi-part sanitary element is manufactured in accordance with a method in accordance with any one of the claims 1 to 9, with the individual parts being assembled together after the injection molding process.

## Revendications

1. Procédé de fabrication de poignées de porte et/ou fenêtre (9) et/ou d'éléments sanitaires, **caractérisé en ce qu'**une matière plastique (11) est projetée au cours d'un seul processus de projection sur la face arrière d'au moins deux parties de feuilles (1, 4), prévues pour différentes zones de surfaces visibles, et est liée à celles-ci.

2. Procédé selon la revendication 1, **caractérisé en ce que**, pendant le processus de projection, les parties de feuilles (1, 4) se chevauchent dans des zones de bordure (7, 8) ou **en ce que**, pendant le processus de projection, les parties de feuilles sont aboutées l'une contre l'autre.

3. Procédé selon l'une quelconque des revendications précédentes, **caractérisé en ce que** des parties de feuilles (1, 4) sont associées à toutes les surfaces visibles.

4. Procédé selon l'une quelconque des revendications précédentes, **caractérisé en ce que**, avant le processus de projection, les parties de feuilles (1, 4) sont transformées sous l'effet de la pression et/ou de la chaleur à partir d'une forme bidimensionnelle en une forme tridimensionnelle, en particulier deux parties de feuilles (1, 4) présentant chacune une forme de semi-coque, lesquelles en position assemblée prennent la forme d'un manchon ouvert sur un côté ou d'un corps tubulaire ouvert sur les deux côtés.

5. Procédé selon l'une quelconque des revendications précédentes, **caractérisé en ce que**, avant le processus de préformage, les parties de feuilles (1, 4) bidimensionnelles présentent un modèle déformé qui, par le processus de préformage, obtient son apparence définitive.

6. Procédé selon l'une quelconque des revendications précédentes, **caractérisé en ce que** les parties de feuilles (1, 4) et la matière plastique (11) à projeter sur leur face arrière sont réalisées au moins en partie dans la même matière, et/ou **en ce que** la matière utilisée pour la feuille est un polyamide, et/ou **en ce que** la matière de feuille est conçue avec une configuration en relief, en particulier avec des picots ou des cannelures.

7. Procédé selon l'une quelconque des revendications précédentes, **caractérisé en ce que** la matière de feuille est munie d'un tissu, qui est agencé de préférence entre deux couches de feuille.

8. Procédé selon l'une quelconque des revendications précédentes, **caractérisé en ce que** les parties de feuilles (1, 4) ont une épaisseur constante, en particulier une épaisseur entre 0,1 mm et 1 mm, la tolérance de l'épaisseur des parties de feuilles (1, 4) étant en particulier inférieure à 0,1 mm.

9. Procédé selon l'une quelconque des revendications précédentes, **caractérisé en ce que** la matière plastique (11) à projeter sur la face arrière est un polyamide recyclé.

10. Procédé, dans lequel au moins une partie d'une poignée de porte et/ou de fenêtre (9) en plusieurs parties et/ou d'un élément sanitaire en plusieurs parties est fabriquée suivant un procédé selon l'une quelconque des revendications 1 à 9, les différentes parties étant assemblées après le processus de projection.
